# EUROPEAN PATENT APPLICATION

(11) **EP 4 471 937 A1**
(43) Date of publication of application: **04.12.2024**
(21) Application number: 22923881.1
(22) Date of filing: 28.01.2022
(51) Int. Cl.: H01M 10/615, H01M 10/6571, H01M 10/658, H01M 50/213, H01M 50/253

(54) **CONTAINER FOR MODULE BATTERIES, AND MODULE BATTERY**

(71) Applicant: NGK Insulators, Ltd., Nagoya-shi, Aichi 467-8530 (JP); BASF SE, 67056 Ludwigshafen am Rhein (DE)
(72) Inventor: HOSHINO, Koji, Nagoya-shi, Aichi 467-8530 (JP); HEIDEBRECHT, Peter, 67056 Ludwigshafen (DE); OTT, Detlef, 67056 Ludwigshafen (DE); MALKO, Daniel, 67056 Ludwigshafen (DE); SCHAEFER, Philipp, 67056 Ludwigshafen (DE)
(74) Representative: Mewburn Ellis LLP
(86) International application number: PCT/JP2022/003401
(87) International publication number: WO 2023/145017

(57) **Abstract**

A module battery having high thermal insulating performance during standby and being easy to manufacture is provided. In a module battery container including: a box for containing a plurality of cells each being a high-temperature secondary cell; and a lid for occluding an opening of the box, the box and the lid each have an atmospheric thermal insulating structure including: an inner container and an outer container each including a metal plate and having a cuboid shape; and a thermal insulating material loaded between the inner container and the outer container, and, in each of the box and the lid, the inner container and the outer container are not in contact with each other, and the thermal insulating material is exposed only at an open end.

## Description

### TECHNICAL FIELD

The present invention relates to a module battery including a plurality of high-temperature secondary cells connected to one another and, in particular, to a structure for heat dissipation thereof.

### BACKGROUND ART

A sodium-sulfur cell (hereinafter referred to as a NaS cell) has already been known as a storage cell for use in connection with a power system. A single NaS cell (cell) is a high-temperature secondary cell generally having a structure in which metallic sodium (Na) and sulfur (S) as active materials are separately stored in a cell (cell container) with β-alumina, which is a solid electrolyte having an Na ion conductivity, as a separator. An operating temperature is approximately 300 °C, and electromotive force is generated in the cell by an electrochemical reaction of the active materials being in a molten (liquid) state at the operating temperature.

The NaS cell is generally used in the form of a module battery including a plurality of cells (a cell group) connected to one another and contained in a thermal insulating container to ensure desired capacity and output (see Patent Document 1, for example). In the module battery, a plurality of circuits (strings) in each of which a plurality of cells are connected in series are connected in parallel to form a block, and a plurality of blocks are connected in series.

For stable operation of a module battery of NaS cells (hereinafter simply referred to as a module battery), not only is an operating temperature of approximately 300 °C required to be suitably maintained during operation (during charge and discharge of cells), but also the operating temperature is required to be maintained to keep active materials in a molten (liquid) state during standby during which charge and discharge of the cells are not performed.

Generally, the operating temperature during operation is maintained using heat of reaction of the active materials, but the heat cannot be used during standby during which the reaction of the active materials does not occur. Thus, in a conventional module battery, a heater is provided in a container to heat the interior of the container using the heater during standby, and a thermal insulating structure is used for the container itself to suppress external heat dissipation, so that the operating temperature is maintained.

For example, Patent Document 1 discloses a module battery in which a container includes a box and a lid each having a vacuum thermal insulating structure and a heater is disposed on sides and a bottom in the box. The vacuum thermal insulating structure of each of the box and the lid is achieved by forming outer surfaces using plate materials of metal (stainless steel) and loading therein a vacuum thermal insulating board.

It is, however, not necessarily easy to form the box and the lid each having the vacuum thermal insulating structure as disclosed in Patent Document 1 and further maintain a vacuum therein over time. For example, in forming the box and the lid, plate materials are required to be securely welded with no gaps therebetween. There is also a problem in that thermal insulation is no longer ensured if a vacuum failure that is breakage of the vacuum occurs from any cause during use of the module battery.

It is also desirable not to complicate a manufacturing process without any reason from the standpoint of ensuring productivity (mass productivity).

### PRIOR ART DOCUMENTS

### PATENT DOCUMENT

Patent Document 1: WO 2015/056739

### SUMMARY

The present invention has been conceived in view of the above-mentioned problems, and it is an object of the present invention to provide a module battery having higher thermal insulating performance during standby and being easier to manufacture than a conventional module battery.

To solve the above-mentioned problems, a first aspect of the present invention is a module battery container including: a box for containing a plurality of cells each being a high-temperature secondary cell; and a lid for occluding an opening of the box, wherein the box and the lid each have an atmospheric thermal insulating structure including: an inner container and an outer container each including a metal plate and having a cuboid shape; and a thermal insulating material loaded between the inner container and the outer container, and, in each of the box and the lid, the inner container and the outer container are not in contact with each other, and the thermal insulating material is exposed only at an open end.

A second aspect of the present invention is the module battery container according to the first aspect, wherein at the open end of each of the box and the lid, a first bent portion of a side plate of the inner container and a second bent portion of a side plate of the outer container form a gap, and the thermal insulating material is exposed from the gap.

A third aspect of the present invention is the module battery container according to the second aspect, wherein the thermal insulating material has a thickness of 10 mm or more and 50 mm or less, the gap is 8 mm or more, and the first bent portion and the second bent portion each have a width of 1 mm or more.

A fourth aspect of the present invention is the module battery container according to any one of the first to the third aspects, wherein the outer container and the inner container of each of the box and the lid each include, at each of four corners, a protruding portion formed by integrating an extending portion of one of mutually orthogonal side plates with a bent portion of the other one of the mutually orthogonal side plates.

A fifth aspect of the present invention is the module battery container according to the fourth aspect, wherein at the protruding portion, the mutually orthogonal side plates are fixed to each other with a rivet.

A sixth aspect of the present invention is the module battery container according to the second or the third aspect, wherein the thermal insulating material includes a stack of a plurality of thermal insulating material plates, and the gap is smaller than a thickness of each of the thermal insulating material plates.

A seventh aspect of the present invention is the module battery container according to any one of the first to the sixth aspects, wherein the thermal insulating material has a thermal conductivity of 20 mW/m·K or less.

An eighth aspect of the present invention is a module battery including: a plurality of cells each being a high-temperature secondary cell; a box for containing the plurality of cells; and a lid for occluding an opening of the box, wherein the box and the lid each have an atmospheric thermal insulating structure including: an inner container and an outer container each including a metal plate and having a cuboid shape; and a thermal insulating material loaded between the inner container and the outer container, and, in each of the box and the lid, the inner container and the outer container are not in contact with each other, and the thermal insulating material is exposed only at an open end.

A ninth aspect of the present invention is the module battery according to the eighth aspect, wherein at the open end of each of the box and the lid, a first bent portion of a side plate of the inner container and a second bent portion of a side plate of the outer container form a gap, and the thermal insulating material is exposed from the gap.

A tenth aspect of the present invention is the module battery according to the ninth aspect, wherein the thermal insulating material has a thickness of 10 mm or more and 50 mm or less, the gap is 8 mm or more, and the first bent portion and the second bent portion each have a width of 1 mm or more.

An eleventh aspect of the present invention is the module battery according to any one of the eighth to the tenth aspects, wherein the outer container and the inner container of each of the box and the lid each include, at each of four corners, a protruding portion formed by integrating an extending portion of one of mutually orthogonal side plates with a bent portion of the other one of the mutually orthogonal side plates.

A twelfth aspect of the present invention is the module battery according to the eleventh aspect, wherein at the protruding portion, the mutually orthogonal side plates are fixed to each other with a rivet.

A thirteenth aspect of the present invention is the module battery according to the ninth or the tenth aspect, wherein the thermal insulating material includes a stack of a plurality of thermal insulating material plates, and the gap is smaller than a thickness of each of the thermal insulating material plates.

A fourteenth aspect of the present invention is the module battery according to any one of the eighth to the thirteenth aspects, wherein the thermal insulating material has a thermal conductivity of 20 mW/m·K or less.

According to the first to the fourteenth aspects of the present invention, the module battery container has the atmospheric thermal insulating structure in which the inner container and the outer container are not in contact with each other to block heat transfer from the inner container to the outer container, so that external heat dissipation from a surface of the outer container during standby of the module battery is reduced compared with a case where a vacuum thermal insulating structure is used. Furthermore, a problem of a thermal insulating failure during use, which is of concern when the vacuum thermal insulating structure is used, does not occur. The thermal insulating material is exposed at the open end of each of the box and the lid to suppress deformation of each of the box and the lid associated with expansion of air by heating during use of the module battery.

In particular, according to the second, the third, the sixth, the ninth, the tenth, and the thirteenth aspects, deformation of each of the box and the lid associated with residence of a gas generated from a binder and the like of the thermal insulating material in each of the box and the lid during an increase in temperature (in particular, a first increase in temperature) and expansion of air present in each of the box and the lid by heating during use of the module battery is suppressed while strength of each of the box and the lid for external deformation is ensured.

In particular, according to the fourth, the fifth, the eleventh, and the twelfth aspects, strength of each of the box and the lid for external deformation is more suitably ensured.

In particular, according to the fifth and the twelfth aspects, there is no need for welding as in a case where the vacuum thermal insulating structure is used, and, from this standpoint, there is no need to be concerned about the thermal insulating failure, and there is a cost advantage.

### BRIEF DESCRIPTION OF DRAWINGS

FIG. 1 is a schematic side view of a module battery 100.
FIG. 2 is a schematic plan view taken along the line A1-A2 of FIG. 1.
FIG. 3 is a perspective view of a box 2.
FIG. 4 is a diagram illustrating assembly of an inner box 5.
FIG. 5 is a diagram illustrating manufacture of the box 2 as a whole including manufacture of an outer box 6.
FIG. 6 is a graph showing a relationship between a heating time and an accumulated power heater amount of module batteries according to an example and a comparative example.

### DESCRIPTION OF EMBODIMENTS

### <Overview of Module Battery>

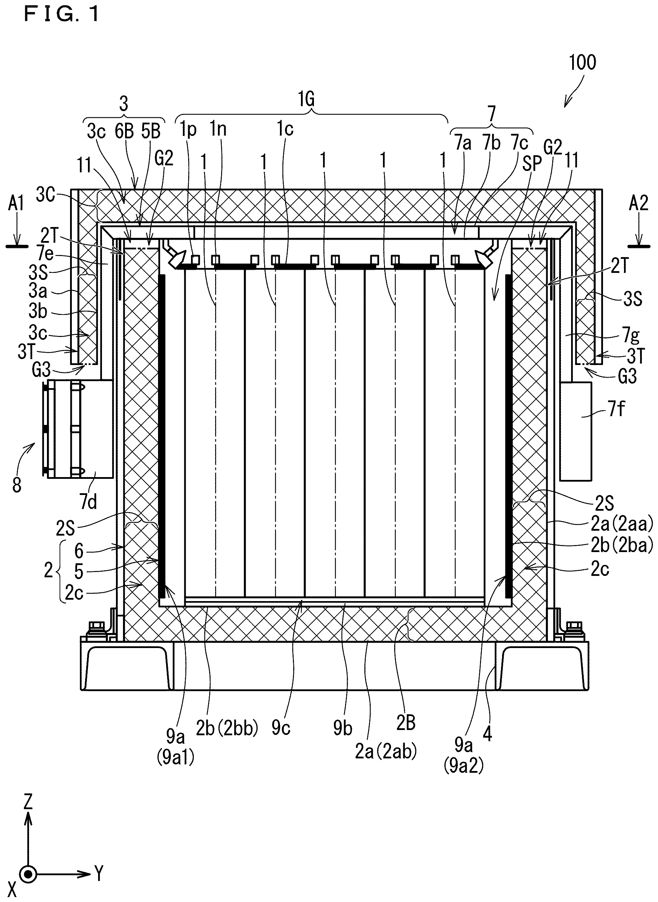

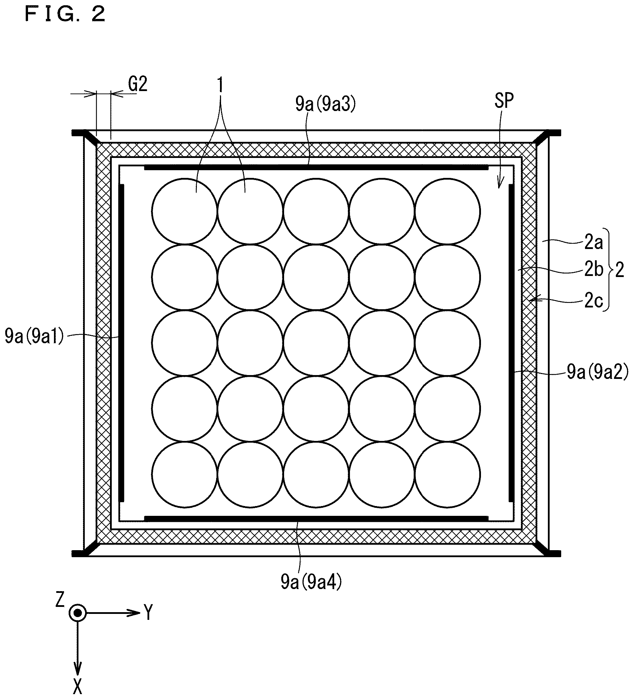

FIG. 1 is a schematic side view of a module battery 100 according to the present embodiment. FIG. 2 is a schematic plan view taken along the line A1-A2 of FIG. 1. Each figure is provided with a right-handed XYZ coordinate system in which a horizontal direction of the front of the module battery 100 is an X-axis direction, a direction orthogonal to the X-axis direction in a horizontal plane is a Y-axis direction, and a vertical direction is a Z-axis direction. Assume that a negative side in the Y-axis direction of the module battery 100 is the front, and a positive side in the Y-axis direction of the module battery 100 is the rear.

The module battery 100 according to the present embodiment generally includes a group cell 1G including a plurality of cells 1 each being a sodium-sulfur cell (NaS cell). The module battery 100 has a configuration in which the group cell 1G is contained in a containing space SP of a box 2 that opens vertically upwards and has a cuboid shape, and a lid 3 that similarly has a cuboid shape and has an opening next larger than the box 2 occludes an opening of the box 2 while surrounding a given range of the top of the box 2. That is to say, the box 2 and the lid 3 constitute a container for the group cell 1G.

A gap between objects arranged in the containing space SP is filled with a sand material. The gap is filled with the sand material to reduce the effect on surroundings in the event of a failure of the cells 1, such as breakage, overheating, and leakage of active materials. Examples of the sand material include expanded vermiculite and silica sand.

The cells 1 are each a cylindrical high-temperature secondary cell that contains metallic sodium (Na) and sulfur (S) as active materials and includes, as a separator to separate them, β-alumina, which is a solid electrolyte having Na ion conductivity. The cells 1 are contained in the box 2 so that longitudinal directions thereof coincide with the vertical direction.

A negative terminal 1n and a positive terminal 1p respectively protrude from the center and a peripheral edge of one end of each of the cells 1 (an upper end when the cell 1 is contained in the box 2). In the group cell 1G, a positive terminal 1p of one of adjacent cells 1 and a negative terminal 1n of the other one of the adjacent cells 1 are electrically connected by a connection terminal 1c to form a circuit (string) in which a plurality of cells 1 are connected in series. The connection terminal 1c is not illustrated in FIG. 2. Furthermore, in the group cell 1G, a plurality of strings are connected in parallel to form a block, and a plurality of blocks are connected in series.

While a case where the group cell 1G includes five cells 1 two-dimensionally arranged in each of the X-axis direction and the Y-axis direction and thus includes a total of 25 cells 1 is shown in the present embodiment, this is just an example, and the number and arrangement of cells 1 constituting the group cell 1G are not limited to those in this example.

The box 2 is secured to a base 4 that supports the box 2 from below. The lid 3 is removably attached to the box 2, is mounted on the box 2 when the module battery 100 is in use, and is removed from above the box 2 when the group cell 1G is loaded and unloaded.

In the module battery 100 according to the present embodiment, the box 2 and the lid 3 constituting the container each have a characteristic structure. The structure of each of the box 2 and the lid 3 and a manufacturing method to achieve the structure will be described in detail below.

The module battery 100 further includes a top duct 7 between the box 2 and the lid 3. More particularly, an insulating cushioning material 11 is disposed on an open end 2T of the box 2, and the top duct 7 is mounted on the cushioning material 11 and extends while bending between the open end 2T of the box 2 and a ceiling 3C of the lid 3 and between sides 2S of the box 2 and sides 3S of the lid 3.

An electric intake fan 8 is attached to the top duct 7. The intake fan 8 is provided to supply external air to the top duct 7.

In addition, side heaters 9a (9a1 to 9a4) are provided on respective inner side surfaces 2ba of the four sides 2S of the box 2 that define sides of the containing space SP.

A bottom heater 9b is provided on an inner bottom surface 2bb of the box 2 that defines a bottom of the containing space SP.

An upper surface of the bottom heater 9b is horizontal, and the group cell 1G is disposed on the upper surface of the bottom heater 9b. More particularly, a plate-like or sheet-like insulator 9c formed of mica is interposed between them, for example, to ensure insulation between the bottom heater 9b and the group cell 1G.

The side heaters 9a and the bottom heater 9b are energized heating heaters provided to heat the interior of the box 2. They are typically used to maintain the interior of the box 2 at an operating temperature to keep the active materials of each of the cells 1 of the group cell 1G in a molten state during standby of the module battery 100 during which charge and discharge of the group cell 1G are not performed.

### < Structure of Container>

The structure of each of the box 2 and the lid 3 constituting the container in the present embodiment will be described next.

As illustrated in FIGs. 1 and 2, the box 2 has a double structure including an inner box (inner container) 5 and an outer box (outer container) 6 each formed of metal. Outer surfaces of the outer box 6 are outer surfaces 2a (four outer side surfaces 2aa and one outer bottom surface 2ab) of the box 2, and inner surfaces of the inner box 5 are inner surfaces 2b (the four inner side surfaces 2ba and the one inner bottom surface 2bb) of the box 2 that define the containing space SP for the group cell 1G. A gap between the inner box 5 and the outer box 6 (between the outer surfaces 2a and the inner surfaces 2b) is filled with an electrically insulating thermal insulating material 2c (indicated by shading in FIGs. 1 and 2). A pair of opposing sides 2S of the four sides 2S of the box 2 is along the X-axis direction, and the other pair of opposing sides 2S of the four sides 2S of the box 2 is along the Y-axis direction.

The lid 3 has a three-layer structure as with the box 2. That is to say, the lid 3 has a double structure including an inner lid (the inner container) 5B and an outer lid (the outer container) 6B each formed of metal. Outer surfaces of the outer lid 6B are outer surfaces 3a of the lid 3, and inner surfaces of the inner lid 5B are inner surfaces 3b of the lid 3. A gap between the inner lid 5B and the outer lid 6B (between the outer surfaces 3a and the inner surfaces 3b) is filled with an electrically insulating thermal insulating material 3c (indicated by shading in FIGs. 1 and 2). A pair of opposing sides 3S of the four sides 3S of the lid 3 is along the X-axis direction, and the other pair of opposing sides 3S of the four sides 3S of the lid 3 is along the Y-axis direction.

Thermal insulating materials for use in an ambient atmosphere are used as the thermal insulating material 2c and the thermal insulating material 3c, and the box 2 and the lid 3 each have an atmospheric thermal insulating structure. More particularly, the outer box 6 and the inner box 5 of the box 2 are shaped and arranged via the thermal insulating material 2c not to be in contact with each other, and the outer lid 6B and the inner lid 5B of the lid 3 are shaped and arranged via the thermal insulating material 3c not to be in contact with each other.

In the module battery 100 according to the present embodiment having such an atmospheric thermal insulating structure, heat transfer from the inner box 5 to the outer box 6 and heat transfer from the inner lid 5B to the outer lid 6B are blocked, so that external heat dissipation from the outer surfaces 2a of the box 2 and the outer surfaces 3a of the lid 3 during standby is reduced compared with a case where a vacuum thermal insulating structure is used. In addition, a problem in that thermal insulation is not ensured due to any failure of the thermal insulating structure during use, which is of concern in a module battery having the vacuum thermal insulating structure, does not occur.

From the standpoint of ensuring sufficient thermal insulating performance using the atmospheric thermal insulating structure, the thermal insulating material 2c and the thermal insulating material 3c each preferably have a lower thermal conductivity and more preferably have a thermal conductivity of 20 mW/m-K or less, which is equal to or less than half the thermal conductivity of a general glass wool thermal insulating material. In this case, thermal insulation necessary for operation of the module battery 100 can be ensured without extremely increasing the thickness of each of the box 2 and the lid 3 compared with a case where the vacuum thermal insulating structure is used. The thermal insulating materials 2c and 3c are each provided to have a thickness of approximately 10 mm to 50 mm.

More particularly, as illustrated in FIGs. 1 and 2, the module battery 100 according to the present embodiment has a configuration in which a gap G2 is provided between the outer box 6 and the inner box 5 at the open end (an upper end in FIG. 1) 2T of the box 2, and the thermal insulating material 2c is externally exposed from the gap G2. Similarly, a configuration in which a gap G3 is provided between the outer lid 6B and the inner lid 5B at an open end (a lower end in FIG. 1) 3T of the lid 3, and the thermal insulating material 3c is externally exposed from the gap G3 is used. A configuration in which the outer box 6 and the inner box 5 are not in contact with each other and the outer lid 6B and the inner lid 5B are not in contact with each other, that is, a configuration in which they are not contiguous is thereby achieved. When the box 2 and the lid 3 each have such a configuration, external heat dissipation during standby of the module battery 100 is reduced as described above.

Furthermore, even when a gas is generated from a binder and the like of the thermal insulating material 2c during an increase in temperature (in particular, a first increase in temperature) of the module battery 100 and when air present in each of the box 2 and the lid 3 expands by heating during use, such a gas and air flow out through the gaps G2 and G3, so that deformation of the box 2 and the lid 3 associated with residence of the generated gas and expansion of air by heating is suppressed. If the box 2 and the lid 3 expand due to residence of the gas and expansion of air by heating and come into contact with a conductor, a ground fault might occur and, in the worst case, the box 2 and the lid 3 might be broken, but the occurrence of such a failure is suitably suppressed in the module battery 100 according to the present embodiment.

The thermal insulating materials 2c and 3c are each plate-like (laminar) in one preferred example but, in this case, are each not required to include a single plate (single layer) and may include a stack of a plurality of thin thermal insulating material plates. In this case, however, thicknesses of the thermal insulating material plates and sizes of the gaps G2 and G3 are adjusted so that the thermal insulating material plates do not protrude from the gaps G2 and G3.

Preferably, a configuration in which metal members such as screws do not connect and fix the outer box 6 and the inner box 5 and do not connect and fix the outer lid 6B and the inner lid 5B is adopted. In this case, not only thermal insulation but also electrical insulation is ensured between the outer box 6 and the inner box 5 and between the outer lid 6B and the inner lid 5B. That is to say, thermal insulation and electrical insulation of each of the box 2 and the lid 3 are increased.

To the extent that thermal insulation of each of the box 2 and the lid 3 is not substantially affected, however, the outer box 6 and the inner box 5 may be connected and fixed and the outer lid 6B and the inner lid 5B may be connected and fixed, with members having a sufficiently lower thermal conductivity than the outer box 6, the inner box 5, the outer lid 6B, and the inner lid 5B. In this case, the box 2 and the lid 3 are reinforced.

### <Manufacture of Box>

A method of manufacturing the box 2 and the lid 3 each having a structure as described above will be described next. Description, however, will be made mainly on the box 2 because the lid 3 includes similar components to the box 2 and is thus manufactured by a similar method to the box 2 although the lid 3 has different sizes of parts (a different aspect ratio) from the box 2.

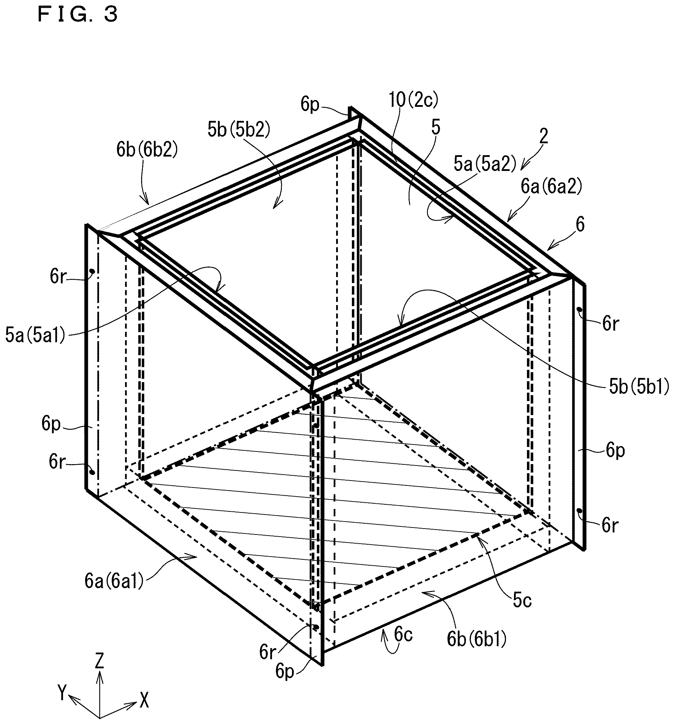

FIG. 3 is a perspective view of the box 2. According to the XYZ coordinate system in FIG. 1 for the module battery 100 as completed, FIG. 3 and subsequent figures are each provided with the coordinate system.

As described above, the box 2 opens on one side, includes the thermal insulating material 2c sandwiched between the outer box 6 and the inner box 5 in each of the sides 2S and a bottom 2B, and has a cuboid structure. Viewed another way, the box 2 can be considered to have a double box structure in which the metal inner box (inner container) 5 formed by connecting plate materials serving as five inner surfaces of the box 2 is contained in the metal outer box (outer container) 6 formed by connecting plate materials serving as five outer surfaces of the box 2 and has a configuration in which the plate-like thermal insulating material 2c (hereinafter referred to as thermal insulating material plates 10) is loaded between the inner box 5 and the outer box 6. While the thermal insulating material plates 10 may each include a stack of a plurality of plates as described above, the thermal insulating material plates 10 are each assumed to include a single layer below for ease of description.

The box 2 is generally manufactured by first manufacturing the inner box 5, then manufacturing the outer box 6 while loading the thermal insulating material plates 10, and finally fitting the inner box 5.

The lid 3 is also considered to have the double box structure in which the thermal insulating material is loaded therein as with the box 2 and is manufactured by similar procedures to the box 2.

As illustrated in FIG. 3, the inner box 5 includes a pair of side plates 5a (5a1 and 5a2) opposing in the X-axis direction, a pair of side plates 5b (5b1 and 5b2) opposing in the Y-axis direction, and a bottom plate 5c. The total of four side plates 5a and 5b serve as the four inner side surfaces 2ba of the box 2, and the bottom plate 5c serves as the inner bottom surface 2bb of the box 2 illustrated in FIGs. 1 and 2.

The outer box 6 includes a pair of side plates 6a (6a1 and 6a2) opposing in the X-axis direction, a pair of side plates 6b (6b1 and 6b2) opposing in the Y-axis direction, and a bottom plate 6c. The total of four side plates 6a and 6b serve as the four outer side surfaces 2aa of the box 2, and the bottom plate 6c serves as the outer bottom surface 2ab of the box 2 illustrated in FIGs. 1 and 2.

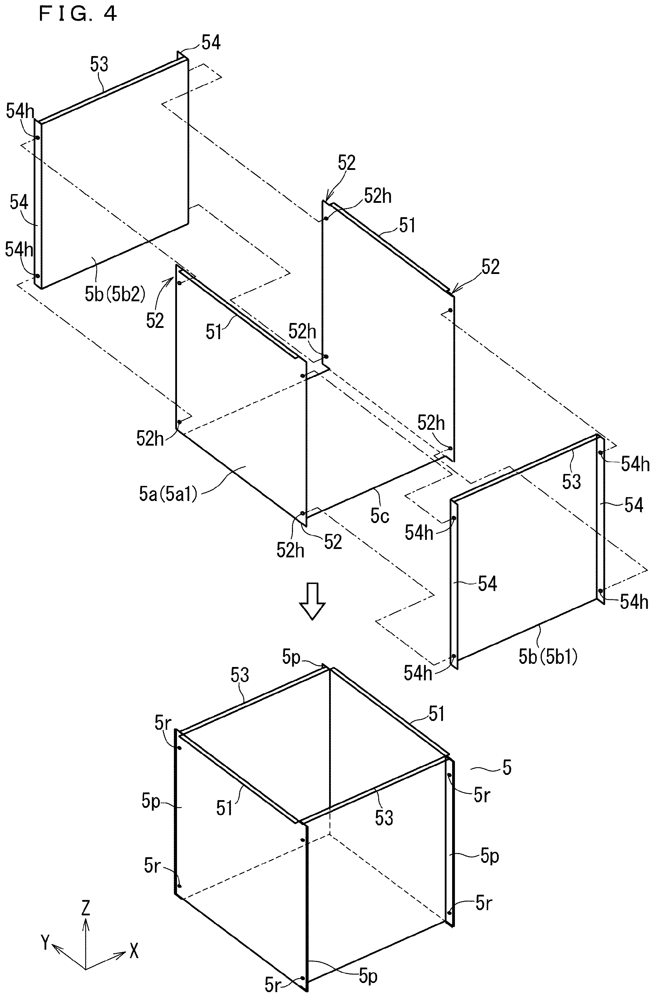

FIG. 4 is a diagram illustrating assembly of the inner box 5. As described above, the inner box 5 includes the pair of side plates 5a (5a1 and 5a2), the pair of side plates 5b (5b1 and 5b2) opposing in the Y-axis direction, and the bottom plate 5c. From among them, the pair of side plates 5a and the bottom plate 5c are integrally prepared in advance by bending a single metal plate. On the other hand, the pair of side plates 5b (5b1 and 5b2) are prepared separately from the pair of side plates 5a (5a1 and 5a2) and the bottom plate 5c and then fixed to the pair of side plates 5a.

The side plates 5a (5a1 and 5a2) include, at respective upper ends in the Z-axis direction, bent portions 51 bent outward of the inner box 5 in the X-axis direction. The side plates 5b (5b1 and 5b2) also include, at respective upper ends in the Z-axis direction, bent portions 53 bent outward of the inner box 5 in the Y-axis direction.

The side plates 5a further include, at opposite ends in the Y-axis direction, extending portions 52 extending beyond the bottom plate 5c in the Y-axis direction. The side plates 5b further include, at opposite ends in the X-axis direction, bent portions 54 bent in the Y-axis direction.

The extending portions 52 of the side plates 5a and the bent portions 54 of the side plates 5b respectively have rivet holes 52h and rivet holes 54h into which rivets 5r for fastening the side plates 5b to the side plates 5a are inserted.

The inner box 5 is completed by fixing the side plates 5b to the side plates 5a. Fixation of them is achieved by fastening the bent portions 54 to the extending portions 52 with the rivets 5r. Protruding portions 5p formed by integrating the extending portions 52 with the bent portions 54 are formed by fastening at respective four corners of the inner box 5.

The bent portions 51, the bent portions 53, and the protruding portions 5p serve to suppress deformation of the inner box 5 by external force and ensure strength of the inner box 5 and further the box 2 as a whole.

While fastening with the rivets 5r is performed at two positions including upper and lower positions of each of the protruding portions 5p in FIG. 4, the number of positions at which fastening with the rivets 5r is performed is not limited to two.

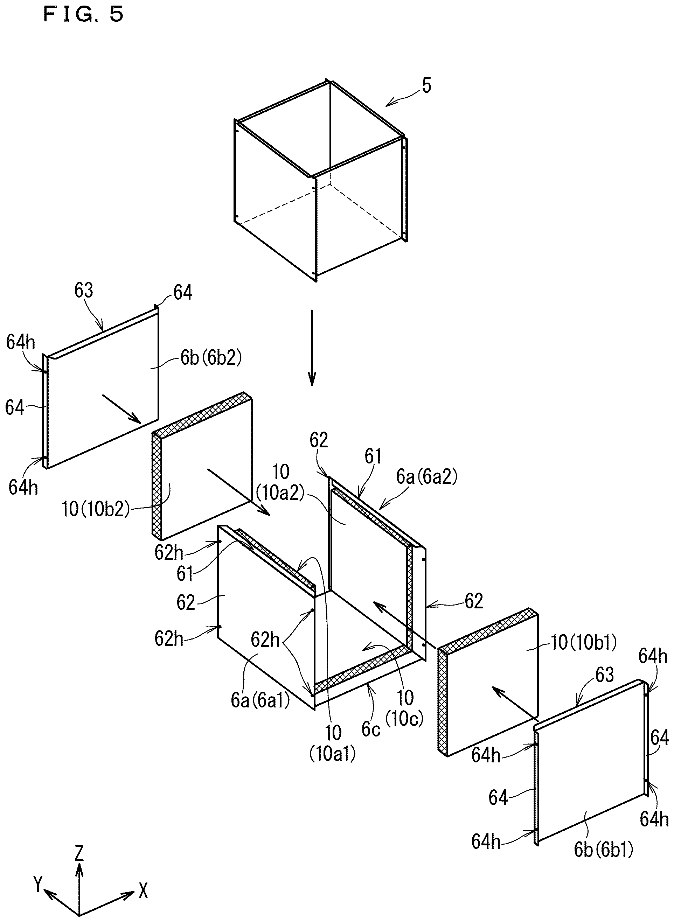

Upon completion of the inner box 5, the box 2 as a whole is manufactured next while the outer box 6 is manufactured. FIG. 5 is a diagram illustrating manufacture of the box 2 as a whole including manufacture of the outer box 6.

While the outer box 6 includes the pair of side plates 6a (6a1 and 6a2), the pair of side plates 6b (6b1 and 6b2) opposing in the Y-axis direction, and the bottom plate 6c, the pair of side plates 6a and the bottom plate 6c are integrally prepared in advance by bending a single metal plate as with the inner box 5. On the other hand, the pair of side plates 6b (6b1 and 6b2) are prepared separately from the side plates 6a (6a1 and 6a2) and the bottom plate 6c and then fixed to the pair of side plates 6a.

The side plates 6a (6a1 and 6a2) include, at respective upper ends in the Z-axis direction, bent portions 61 bent inward of the outer box 6 in the X-axis direction. The side plates 6b (6b1 and 6b2) also include, at respective upper ends in the Z-axis direction, bent portions 63 bent inward of the outer box 6 in the Y-axis direction.

The side plates 6a further include, at opposite ends in the Y-axis direction, extending portions 62 extending beyond the bottom plate 6c in the Y-axis direction. The side plates 6b further include, at opposite ends in the X-axis direction, bent portions 64 bent in the Y-axis direction.

The extending portions 62 of the side plates 6a and the bent portions 64 of the side plates 6b respectively have rivet holes 62h and rivet holes 64h into which rivets 6r for fastening the side plates 6b to the side plates 6a are inserted.

The outer box 6 is completed by fastening the side plates 6b to the side plates 6a with the rivets as described above. Prior to fastening, however, the thermal insulating material plates 10 (10a1, 10a2, 10b1, 10b2, and 10c) are arranged at respective positions between the outer box 6 and the inner box 5 of the box 2.

Specifically, the thermal insulating material plate 10c is first disposed on the bottom plate 6c contiguous with the side plates 6a, and the thermal insulating material plates 10a1 and 10a2 are further arranged along the respective side plates 6a (6a1 and 6a2). FIG. 5 illustrates a state in which these thermal insulating material plates 10c, 10a1, and 10a2 have already been arranged.

The thermal insulating material plates 10b1 and 10b2 are then arranged to be in contact with surfaces perpendicular to a Y-axis of the thermal insulating material plate 10c, the thermal insulating material plate 10a1, and the thermal insulating material plate 10a2 having been arranged previously.

The side plates 6b1 and 6b2 are then arranged, at opposite ends in the Y-axis direction of the side plates 6a1 and 6a2, between the extending portions 62 of the side plates 6a1 and 6a2 so that the bent portions 64 of the side plates 6b1 and 6b2 overlap the extending portions 62 of the side plates 6a1 and 6a2.

The rivets 6r are driven into the rivet holes 62h and 64h, which are now coaxial, to fasten the side plates 6b1 and 6b2 to the side plates 6a1 and 6a2. Protruding portions 6p integrating the extending portions 62 with the bent portions 64 are formed by fastening at respective four corners of the outer box 6. This completes the outer box 6 with the thermal insulating material plates 10 being arranged along inner surfaces thereof.

The bent portions 61, the bent portions 63, and the protruding portions 6p serve to suppress deformation of the outer box 6 by external force and ensure strength of the outer box 6 and further the box 2 as a whole.

The inner box 5 is finally inserted, from above, into a space in the outer box 6 surrounded by the thermal insulating material plates 10. This completes the box 2. In other words, after the thermal insulating material plates 10 are arranged along the inner surfaces of the outer box 6, the inner box 5 is fit into a cuboid space defined by the thermal insulating material plates 10, thereby to obtain the box 2.

It is clear from the above-mentioned manufacturing procedures that the box 2 of the module battery 100 according to the present embodiment has a structure in which the outer box 6 and the inner box 5 are in no contact with each other.

In the box 2 as obtained, the thermal insulating material plates 10 are exposed only between the bent portions 51 of the side plates 5a of the inner box 5 and the bent portions 61 of the side plates 6a of the outer box 6 and between the bent portions 53 of the side plates 5b of the inner box 5 and the bent portions 63 of the side plates 6b of the outer box 6. That is to say, it serves as the gap G2 between the outer box 6 and the inner box 5 of the box 2.

In addition, the bent portions 51 and 53 of the inner box 5 have respectively been provided by bending the side plates 5a and 5b, and the bent portions 61 and 63 of the outer box 6 have respectively been provided by bending the side plates 6a and 6b, so that the bent portions 51 and 53 and the bent portions 61 and 63 respectively serve to ensure strength for deformation of the inner box 5 and the outer box 6.

That is to say, the bent portions 51 and the bent portions 53 of the inner box 5 and the bent portions 61 and the bent portions 63 of the outer box 6 serve to ensure strength of the box 2 together with the protruding portions 5p and the protruding portions 6p described above without bringing the outer box 6 and the inner box 5 into contact with each other.

The bent portions 51 and the bent portions 53 of the inner box 5 and the bent portions 61 and the bent portions 63 of the outer box 6 are preferably provided so that the gap G2 has a size of 8 mm or more. In this case, a gas successfully flows out of the gap G2. On the other hand, the bent portions are each required to have a width of at least 1 mm or more in terms of suitably holding the thermal insulating material plates 10.

For example, when a thermal insulating material plate 10 having a thickness of 10 mm is used as the thermal insulating material 2c, a width of each of the bent portions is determined to be 1 mm. On the other hand, when a thermal insulating material plate 10 having a thickness of 50 mm is used, the width of each of the bent portions can be selected from a range of 1 mm to 21 mm.

Furthermore, the lid 3 having a similar configuration to the box 2 as described above is manufactured by similar procedures to the box 2 although the procedures are not described in detail. In other words, the lid 3 generally has a configuration in which a plate-like thermal insulating material similar to the thermal insulating material plates 10 is loaded, as the thermal insulating material 3c, between the outer lid (outer container) 6B having a cuboid shape corresponding to the outer box 6 of the box 2 and the inner lid (outer container) 5B having a cuboid shape corresponding to the inner box 5 of the box 2. The lid 3 thus has a configuration in which the outer lid 6B and the inner lid 5B are in no contact with each other as with the box 2.

In addition, the gap G3 is provided between bent portions of the outer lid 6B and bent portions of the inner lid 5B, and the outer lid 6B and the inner lid 5B include protruding portions similar to those of the outer box 6 and the inner box 5 to ensure strength against expansion of air in the lid 3 during operation and deformation by external force.

The gap G3 of the lid 3 is also preferably provided to have a size of 8 mm or more as with the gap G2 of the box 2. In this case, a gas successfully flows out of the gap G3.

The bent portions of the outer lid 6B and the inner lid 5B are each only required to be provided to have a similar width to that of each of the bent portions of the outer box 6 and the inner box 5 of the box 2. The bent portions of the outer lid 6B and the inner lid 5B also serve to prevent the thermal insulating material 3c from escaping from the lid 3, for example, falling during use.

As described above, according to the present embodiment, the module battery in which the plurality of cells each being the high-temperature secondary cell, such as the NaS cell, are connected to one another and contained in the container has a configuration that the box and the lid constituting the container each have the atmospheric thermal insulating structure in which the gap between the outer container (the outer box and the outer lid) and the inner container (the inner box and the inner lid) each including the metal plate is filled with the thermal insulating material, and the outer container and the inner container are not in contact with each other to block heat transfer from the inner container to the outer container, so that external heat dissipation from the surface of the outer container during standby of the module battery is reduced compared with a case where the vacuum thermal insulating structure is used. In addition, a problem of a thermal insulating failure during use, which is of concern when the vacuum thermal insulating structure is used, does not occur.

Furthermore, the metal plates forming each of the box and the lid are fixed by fastening with the rivets to eliminate the need for welding as in a case where the vacuum thermal insulating structure is used, and, from this standpoint, there is no need to be concerned about the thermal insulating failure, and there is a cost advantage. From the standpoint of more tightly and securely fixing the metal plates, a combined use of fastening with the rivets and welding is allowed.

The gap between the outer box and the inner box from which the thermal insulating material is exposed is provided only at the open end, so that deformation of each of the box and the lid associated with residence of the gas generated from the binder and the like of the thermal insulating material in each of the box and the lid during the increase in temperature (in particular, the first increase in temperature) and expansion of air present in each of the box and the lid by heating during use of the module battery is suppressed.

Furthermore, the outer box and the inner box of the box and the outer lid and the inner lid of the lid each include the bent portions at the open end, and the protruding portions are provided at the respective four corners of each of the outer box and the inner box of the box and the outer lid and the inner lid of the lid to ensure strength of each of the box and the lid for deformation by external force.

### Examples

Experiments were conducted to check the thermal insulating performance of the module battery 100 according to the above-mentioned embodiment. As the module battery 100 according to an example, a module battery including 25 cells 1 contained in the arrangement illustrated in FIG. 3 and having a width of 0.8 m, a length of 1.0 m, a height of 0.8 m, and a weight of approximately 400 kg was prepared. The side heaters 9a and the bottom heater 9b each had a capacity of approximately 1.5 kW/200 V.

As a comparative example, a module battery having a similar configuration to the module battery 100 according to the example except that the inner box 5 and the outer box 6 of the box 2 are contiguous not to form the gap G2, and the inner lid 5B and the outer lid 6B of the lid 3 are contiguous not to form the gap G3 was prepared.

The heaters (the side heaters 9a and the bottom heater 9b) of the module batteries according to the example and the comparative example were energized for 24 straight hours for heating. A control temperature inside the battery was set to 305 °C. An ambient temperature was 25 °C. That is to say, a temperature difference between inside and outside the battery was 280 °C.

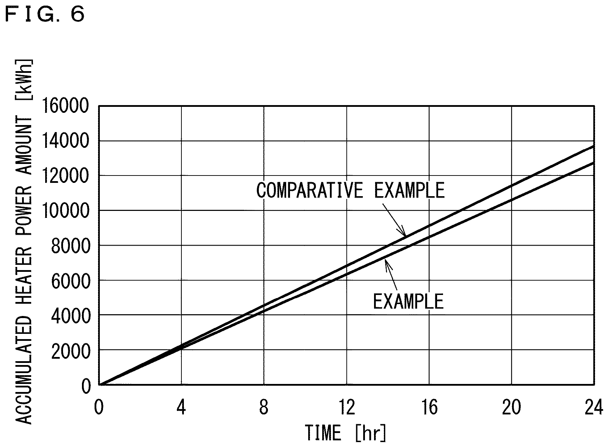

FIG. 6 is a graph showing a relationship between a heating time and an accumulated power heater amount during heating. Average power obtained from the graph was 532 W in the example and was 573 W in the comparative example.

The result indicates that heat dissipation of the module battery according to the example is approximately 40 W lower than that according to the comparative example.

## Claims

1. A module battery container comprising:
a box for containing a plurality of cells each being a high-temperature secondary cell; and
a lid for occluding an opening of the box, wherein
the box and the lid each have an atmospheric thermal insulating structure including:
an inner container and an outer container each including a metal plate and having a cuboid shape; and
a thermal insulating material loaded between the inner container and the outer container, and
in each of the box and the lid,
the inner container and the outer container are not in contact with each other, and
the thermal insulating material is exposed only at an open end.

2. The module battery container according to claim 1, wherein
at the open end of each of the box and the lid, a first bent portion of a side plate of the inner container and a second bent portion of a side plate of the outer container form a gap, and the thermal insulating material is exposed from the gap.

3. The module battery container according to claim 2, wherein
the thermal insulating material has a thickness of 10 mm or more and 50 mm or less,
the gap is 8 mm or more, and
the first bent portion and the second bent portion each have a width of 1 mm or more.

4. The module battery container according to any one of claims 1 to 3, wherein
the outer container and the inner container of each of the box and the lid each include, at each of four corners, a protruding portion formed by integrating an extending portion of one of mutually orthogonal side plates with a bent portion of the other one of the mutually orthogonal side plates.

5. The module battery container according to claim 4, wherein
at the protruding portion, the mutually orthogonal side plates are fixed to each other with a rivet.

6. The module battery container according to claim 2 or 3, wherein
the thermal insulating material includes a stack of a plurality of thermal insulating material plates, and the gap is smaller than a thickness of each of the thermal insulating material plates.

7. The module battery container according to any one of claims 1 to 6, wherein
the thermal insulating material has a thermal conductivity of 20 mW/m·K or less.

8. A module battery comprising:
a plurality of cells each being a high-temperature secondary cell;
a box for containing the plurality of cells; and
a lid for occluding an opening of the box, wherein
the box and the lid each have an atmospheric thermal insulating structure including:
an inner container and an outer container each including a metal plate and having a cuboid shape; and
a thermal insulating material loaded between the inner container and the outer container, and
in each of the box and the lid,
the inner container and the outer container are not in contact with each other, and
the thermal insulating material is exposed only at an open end.

9. The module battery according to claim 8, wherein
at the open end of each of the box and the lid, a first bent portion of a side plate of the inner container and a second bent portion of a side plate of the outer container form a gap, and the thermal insulating material is exposed from the gap.

10. The module battery according to claim 9, wherein
the thermal insulating material has a thickness of 10 mm or more and 50 mm or less,
the gap is 8 mm or more, and
the first bent portion and the second bent portion each have a width of 1 mm or more.

11. The module battery according to any one of claims 8 to 10, wherein
the outer container and the inner container of each of the box and the lid each include, at each of four corners, a protruding portion formed by integrating an extending portion of one of mutually orthogonal side plates with a bent portion of the other one of the mutually orthogonal side plates.

12. The module battery according to claim 11, wherein
at the protruding portion, the mutually orthogonal side plates are fixed to each other with a rivet.

13. The module battery according to claim 9 or 10, wherein
the thermal insulating material includes a stack of a plurality of thermal insulating material plates, and the gap is smaller than a thickness of each of the thermal insulating material plates.

14. The module battery according to any one of claims 8 to 13, wherein
the thermal insulating material has a thermal conductivity of 20 mW/m·K or less.
